# EUROPÄISCHE PATENTANMELDUNG

(11) **EP 0 833 523 A2**
(43) Veröffentlichungstag der Anmeldung: **01.04.1998**
(21) Anmeldenummer: 97202823.7
(22) Anmeldetag: 15.09.1997
(51) Int. Cl.: H04N 9/64

(54) **Verfahren und Anordnung zur Farbkantenversteilerung**

(30) Priorität: 26.09.1996 DE 19639572
(71) Anmelder: Philips Patentverwaltung GmbH, 22335 Hamburg (DE); Philips Electronics N.V., 5621 BA Eindhoven (NL)
(72) Erfinder: Harlos, Hartmut, Röntgenstra e 24, 22335 Hamburg (DE); Volmari, Frank, Röntgenstra e 24, 22335 Hamburg (DE)
(74) Vertreter: von Laue, Hanns-Ulrich, Dipl.-Ing.

(57) **Zusammenfassung**

Bei erfindungsgemäßen Verfahren und Anordnungen zur Versteilerung der Kanten eines Farbsignals, wobei ein Steuersignal generiert wird, welches durch Differentiation, Gleichrichtung und durch nachfolgende Differentiation der gleichgerichteten ersten Differentiation gewonnen wird und zeitlich dem Farbsignal zugeordnet ist, wobei in Abhängigkeit des Steuersignals ein Kopieren von Farbwerten von Referenzbildpunkten des Farbsignals auf Flankenbildpunkte des Farbsignals in der Weise vorgenommen wird, daß bei positivem Steuersignal ein Kopieren der Farbwerte von vor den Flankenbildpunkten angeordneten Referenzbildpunkten und bei negativem Steuersignal von hinter dem Flankenbildpunkten angeordneten Referenzbildpunkten auf die Flankenbildpunkte erfolgt, wird zur Vermeidung von Verfälschungen der Farbwerte von Impulsen, die versteilert werden, ein Kopieren eines Farbwertes eines Referenzbildpunktes auf einen Flankenbildpunkt nur dann vorgenommen, wenn die Werte des Steuersignals in dem zugeordneten Bereich zwischen dem Referenzbildpunkt und dem Flankenbildpunkt keinen Nulldurchgang aufweisen.

## Beschreibung

Die Erfindung betrifft ein Verfahren und eine Anordnung zur Versteilerung der Kanten eines Farbsignals, wobei ein Steuersignal generiert wird, welches durch Differentiation, Gleichrichtung und durch nachfolgende Diferentiation der gleichgerichteten ersten Differentiation gewonnen wird und zeitlich dem Farbsignal zugeordnet ist, wobei in Abhängigkeit des Steuersignals ein Kopieren von Farbwerten von Referenzbildpunkten des Farbsignals auf Flankenbildpunkte des Farbsignals in der Weise vorgenommen wird, daß bei positivem Steuersignal ein Kopieren der Farbwerte von vor den Flankenbildpunkten angeordneten Referenzbildpunkten und bei negativem Steuersignal von hinter dem Flankenbildpunkten angeordneten Referenzbildpunkten auf die Flankenbildpunkte erfolgt.

Eine derartige Anordnung ist aus den PHILIPS ICs SAA4970 und SAA7158 bekannt. Dort wird zur Versteilerung der Kanten eines Farbsignals bzw. zweier in dem Farbsignal vorhandener Farbdifferenzsignale dieses zweifach differenziert. Das Ergebnis der zweiten Differentiation wird dazu herangezogen, bei positivem Signal ein Kopieren der Farbwerte von vor einer Flanke angeordneten Bildpunkten auf Bildpunkte im Flankenbereich und bei negativem Signal ein Kopieren von Farbbildpunktwerten hinter der Flanke auf Bildpunkte im Bereich der Flanke vorzunehmen. Damit wird eine Versteilerung der Flanke erreicht. Zusätzlich ist eine sogenannte "Hill-Protection" vorgesehen, welche dazu dient, insbesondere schmale Impulse möglichst wenig zu verformen. Diese Hill-Protection sieht vor, daß bei Nullstellen der ersten Differentiation kein Kopieren über die Nullstelle hinweg vorgenommen wird. Trotz dieser sogenannten Hill-Protection tritt bei dieser Anordnung das Problem auf, daß beispielsweise bei benachbarten Impulsen verschiedener Farbwerte ein Vermischen von deren Farbwerten durch den oben beschriebenen Kopiervorgang im Übergangsbereich zwischen den beiden Impulsen stattfindet. So werden beispielsweise Farbpunktwerte eines ersten roten Impulse aus dessen Auslaufbereich in den Eingangsbereich eines nachfolgenden grünen Impulses übertragen und umgekehrt. Es findet damit eine visuell deutlich wahrnehmbare Farbvermischung statt, oder es erscheinen Farben in einem eigentlich farblosen Bereich.

Es ist Aufgabe der Erfindung, ein Verfahren und eine Anordnung anzugeben, bei denen dieses Problem nicht auftritt, welche aber gleichwohl ein gutes Farbkantenversteilerungsergebnis liefern.

Diese Aufgabe ist erfindungsgemäß für ein Verfahren dadurch gelöst, daß ein Kopieren eines Farbwertes eines Referenzbildpunktes auf einen Flankenbildpunkt nur dann erfolgt, wenn die Werte des Steuersignals in dem zugeordneten Bereich zwischen dem Referenzbildpunkt und dem Flankenbildpunkt keinen Nulldurchgang aufweisen.

Bei dem erfindungsgemäßen Verfahren wird das Farbsignal zunächst einmal differenziert. Nach der ersten Differentiation erfolgt eine Gleichrichtung des Differentiationsergebnisses. Dieses gleichgerichtete Signal wird dann nochmals differenziert. Dieses Signal wird nachfolgend als Steuersignal bezeichnet.

In an sich bekannter Weise wird in Abhängigkeit des Steuersignals ein Kopieren von Farbwerten von sogenannten Referenzbildpunkten auf Flankenbildpunkte vorgenommen. Bei positivem Steuersignal werden Farbwerte von Referenzbildpunkten, die vor den Flankenbildpunkten angeordnet sind, auf diese kopiert. Bei negativem Steuersignal werden Farbwerte von Referenzbildpunkten, die hinter den Flankenbildpunkten angeordnet sind, auf diese kopiert. Beispielsweise im Anfangsbereich einer Flanke werden unmittelbar vor der Flanke angeordnete Farbwerte auf Farbwerte im Anfangsbereich der Flanke übertragen. Umgekehrt werden im Bereich hinter der Flanke angeordnete Farbwerte von Bildpunkten auf Bildpunkte übertragen, die im Endbereich der Flanke angeordnet sind. Damit wird im Ergebnis sowohl im Anfangsbereich wie auch im Endbereich der Flanke diese deutlich versteilert, so daß visuell ein besserer Schärfeeindruck bezüglich der Farbwerte entsteht.

Gemäß der Erfindung wird dieses Steuersignal zusätzlich dazu herangezogen, in bestimmten Bereichen des Farbsignals dieses Kopieren von Farbwerten einzuschränken, um einerseits die Verformung von Impulsen, andererseits aber auch die oben beschriebene Farbvermischung zu vermeiden.

Das Steuersignal ist zeitlich dem ursprünglichen Farbsignal zugeordnet, d.h. jeder einzelne Wert des Steuersignals liegt zeitlich parallel zu dem entsprechenden Wert des Farbsignal vor, aus dem er durch zweifache Differentiation vorgegangen ist. Tritt in dem Steuersignal ein Nulldurchgang von dessen Werten auf, so wird über diesen Nulldurchgang hinweg in dem zugeordneten Farbsignal kein Kopieren von Farbwerten der Bildpunkte vorgenommen. Ein Kopieren von Farbwerten erfolgt also nicht über Bereiche hinweg, in denen das zugeordnete Steuersignal einen Nulldurchgang aufweist. In allen übrigen Bereichen wird das Kopieren in oben beschriebener Weise vorgenommen. So kann beispielsweise vor einem Nulldurchgang des Steuersignals im Endbereich einer Flanke der oben beschriebene Kopiervorgang erfolgen. Ebenso kann in einem hinter diesen Nulldurchgang vorliegenden Flankenbereich einer nächsten nachfolgen Flanke ebenfalls deren Farbkante in oben beschriebener Weise versteilert werden. Über den Nulldurchgang des Steuersignals hinweg, also über den Grenzbereich zwischen beiden Flanken hinweg, findet jedoch kein Kopieren statt. Damit wird die oben beschriebene Farbvermischung verhindert.

Innerhalb eines beispielsweise relativ schmalen Impulses weist in dessen Mittenbereich das Steuersignal ebenfalls einen Nulldurchgang auf. Damit wird ähnlich wie beim Stande der Technik verhindert, daß die Form des Impulses durch die Farbkantenversteilerung verfälscht wird.

Gemäß einer Ausgestaltung der Erfindung ist vorgesehen, daß in einem vorgebbaren Bereich um eine Nullstelle der Werte des Steuersignals herum kein Kopiervorgang der Farbwerte der Bildpunkte im zugeordneten Bereich des Farbsignals erfolgt.

Der oben beschriebene "verbotene" Bereich für Kopiervorgänge zur Farbkantenversteilerung kann um eine Nullstelle des Steuersignals herum zusätzlich verbreitert werden. Damit kann der Bereich, über den hinweg kein Kopiervorgang erfolgt, verbreitert werden, um die Gefahr der Farbvermischung auch bei sehr flachen Impulsen zusätzlich zu verringern.

Für eine Ausgestaltung des erfindungsgemäßen Verfahrens ist gemäß einer weiteren Ausgestaltung der Erfindung vorgesehen, daß das Farbsignal in Form zweier Farbdifferenzsignale vorliegt und daß die Farbdifferenzsignale getrennt verarbeitet werden. Das oben beschriebene erfindungsgemäße Verfahren ist auch dann vorteilhaft anzuwenden, wenn das Farbsignal in Form zweier Farbdifferenzsignale vorliegt. Es werden dann die Farbdifferenzsignale getrennt in oben beschriebener Weise verarbeitet, d.h. insbesondere auch die Differentiationen und die Gleichrichtung werden getrennt für beide Signale vorgenommen. Das Verfahren selbst arbeitet dann für diese Farbdifferenzsignale wie oben beschrieben.

Gemäß einer weiteren Ausgestaltung der Erfindung ist für eine Anordnung zur Durchführung des Verfahrens vorgesehen, daß das Farbsignal einem ersten Differenzierer und einer Kopierschaltung zugeführt wird, daß das Ausgangssignal des ersten Differenzierers einem Gleichrichter zugeführt wird, dessen Ausgangssignal einem zweiten Differenzierer zugeführt wird, der das Steuersignal generiert, und daß eine Steuerschaltung vorgesehen ist, welche in Abhängigkeit des Steuersignals dieses mittels einer Kopierbegrenzungsschaltung so verändert, daß ein Kopieren von Farbdaten zwischen Bildpunkten des Farbsignals mittels der Kopierschaltung ausschließlich in solchen Bereichen des Farbsignals stattfindet, in denen die Werte des zugeordneten Steuersignals keinen Nulldurchgang aufweisen.

Mit dieser an sich recht einfachen Anordnung wird das oben beschriebene Verfahren vorteilhaft realisiert. Die Steuerschaltung steuert dabei einerseits die Kopiervorgänge und andererseits die Kopierbegrenzungsschaltung so, daß ein Kopieren über Nulldurchgänge des Steuersignals hinweg nicht vorgenommen wird.

Liegt das Farbsignal in Form zweier Farbdifferenzsignale vor, so ist gemäß einer weiteren Ausgestaltung der Erfindung vorgesehen, daß den Farbdifferenzsignalen jeweils ein erster Differenzierer, ein Gleichrichter und ein zweiter Differenzierer zugeordnet sind. Diese Lösung ist vorteilhaft, da auf diese Weise die Versteilerung für beide Farbdifferenzsignale vollständig getrennt erfolgt.

Zur Vereinfachung der Schaltung kann jedoch auch gemäß einer weiteren Ausgestaltung der Erfindung vorgesehen sein, daß das Farbsignal in Form zweier Farbdifferenzsignale vorliegt, daß jedem Farbsignal jeweils ein erster Differenzierer zugeordnet ist und daß die Ausgangssignale der beiden ersten Differenzierer einem Gleichrichter zugeführt werden, dem ein zweiter Differenzierer nachgeschaltet ist.

Nachfolgend wird ein Ausführungsbeispiel anhand der Zeichnung näher erläutert. Es zeigen:
Fig. 1 ein Zeitdiagramm eines Farbsignalabschnittes mit zwei Farbimpulsen, die Generierung der ersten Differentiation des Farbsignals, deren Gleichrichtung und deren nachfolgende zweite Differentiation zur Erzeugung des Steuersignals und das schließlich bezüglich seiner Farbkanten versteilerte Farbsignal und
Fig. 2 ein Blockschaltbild einer Anordnung zur Durchführung des Verfahrens.

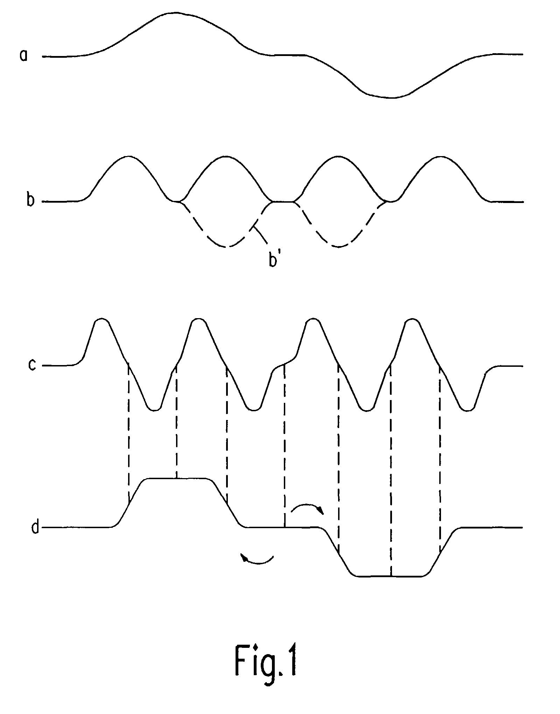

Das Zeitdiagramm gemäß Fig. 1 zeigt in einem Kurvenverlauf a ein Farbdifferenzsignal eines Farbsignals. Bei diesem Farbdifferenzsignal kann es sich beispielsweise um ein Farbdifferenzsignal R-Y handeln. Ein vollständiges Farbsignal setzt sich zusammen aus zwei Farbdifferenzsignalen, so daß ein zweites Farbdifferenzsignal vorliegt, welches in der Figur nicht dargestellt ist, jedoch nach der gleichen Vorgehensweise verarbeitet wird.

Der Kurvenverlauf a des Farbdifferenzsignals R-Y in Fig. 1 zeigt einen ersten positiven Impuls, der für Rot-Farbwerte steht. Diesem ersten positiven Impuls folgt unmittelbar ein zweiter negativer Impuls, der in diesem Falle für Grün-Farbwerte steht.

In der Fig. 1 ist ferner ein Kurvenverlauf b aufgetragen, der die gleichgerichtete Differentiation des Farbdifferenzsignals gemäß Kurvenverlauf a darstellt. Mittels gestrichelten Kurvenverlaufs ist auch ein Signal b' dargestellt, bei dem es sich um die nicht gleichgerichtete Differentiation des Farbdifferenzsignals gemäß Kurvenverlauf a handelt.

Zur Erzeugung des Steuersignals wird die gleichgerichtete erste Differentiation b des Farbsignals herangezogen. Dies zeigt der Kurvenverlauf c in Fig. 1. Dieses Steuersignal gemäß Fig. 1c wird durch Differentiation aus der gleichgerichteten ersten Differentiation gemäß Kurvenverlauf b gewonnen.

In Abhängigkeit des Steuersignals gemäß Kurvenverlauf c in Fig. 1 werden die Farbkanten des Farbdifferenzsignals gemäß Kurvenverlauf a in Fig. 1 versteilert. Ebenfalls in Abhängigkeit des Steuersignals wird jedoch eine Begrenzung dieser Farbkantenversteilerung bzw. der zur Farbkantenversteilerung vorgesehenen Kopiervorgänge vorgenommen.

In einem Kurvenverlauf d in Fig. 1 ist das in Abhängigkeit des Steuersignals gemäß Kurvenverlauf c versteilerte Farbdifferenzsignal gemäß Kurvenverlauf a dargestellt. Der Kurvenverlauf d zeigt die zwei Impulse des ursprünglichen Farbdifferenzsignals, jedoch mit deutlich versteilerten Flanken. Dabei weisen die Impulse eine "saubere" Form auf, welche insbesondere keine Welligkeiten im Impulsverlauf zeigt. Darüber hinaus hat kein Kopieren von Farbwerten des Rot-Impulses auf den Grün-Impuls oder umgekehrt stattgefunden.

Im Anfangsbereich des ersten Impulses des Signals a weist das Steuersignal c positive Werte auf. In diesem Bereich wird ein Kopieren von Farbwerten von Referenzbildpunkten auf Flankenbildpunkte vorgenommen. Dabei sind die Flankenbildpunkte im Anfangsbereich des Impulses, insbesondere bis zu der Mitte der Vorderflanke des Impulses, angeordnet. Die Referenzbildpunkte sind vor der Flanke des Farbdifferenzsignals angeordnet. Im Bereich der Mitte der Vorderflanke des Impulses weist das Steuersignal c einen Nulldurchgang auf. Erfindungsgemäß wird über diesen Nulldurchgang des Steuersignals hinweg kein Kopieren von Farbwerten innerhalb des Farbdifferenzsignals vorgenommen. Hinter diesem Mittelpunkt der Vorderflanke wird wiederum ein Kopieren vorgenommen, jedoch nun im umgekehrter Richtung, da das Steuersignal c in diesem Bereich negative Werte aufweist. Es werden also in diesem Bereich die Farbwerte von hinter der Flanke angeordneten Referenzbildpunkten auf Flankenbildpunkte vorgenommen, die in der zweiten Hälfte der Vorderflanke des Impulses angeordnet sind. Etwa im Mittenbereich des Impulses weist das Steuersignal c wiederum einen Nulldurchgang auf, was zur Folge hat, daß über diesen Bereich hinweg ebenfalls kein Kopiervorgang stattfindet. Damit wird erreicht, daß der Impuls im Kurvenverlauf d des versteilerten Signals eine möglichst ebene Impulsfläche aufweist. Würde an dieser Stelle keine Begrenzung des Kopiervorgangs stattfinden, würde der Impuls eine wellige Dachfläche aufweisen.

Die Rückflanke des ersten Impulses wird in entsprechender Weise bearbeitet. In dem ersten Bereich, in dem das Steuersignal c positive Werte aufweist, werden Farbwerte von Referenzbildpunkten vor der Flanke auf den Anfangsbereich der Flanke kopiert. Umgekehrt wird in der zweiten Hälfte der Rückflanke bei negativem Steuersignal c ein Kopieren vorgenommen, bei dem Farbwerte von Referenzbildpunkten, die hinter der Flanke angeordnet sind, auf Flankenbildpunkte vorgenommen wird, die im zweiten Bereich der Rückflanke angeordnet sind. Auch hier gilt, daß über den Mittelpunkt der Rückflanke hinweg kein Kopiervorgang vorgenommen wir, da das Steuersignal c dort einen Nulldurchgang aufweist.

Im Übergangsbereich zwischen den beiden Impulsen des Farbdifferenzsignals a weist das Steuersignal c ebenfalls einen Nulldurchgang auf. In dem Bereich vor diesem Nulldurchgang weist das Steuersignal negative Werte auf, so daß ein Kopieren von Farbbildpunkten in oben beschriebener Weise für den zweiten Teil der Rückflanke des ersten Impulses vorgenommen wird. Hinter diesem Nulldurchgang des Steuersignals weist dieses positive Werte auf, so daß für den ersten Teilbereich der Vorderflanke des nachfolgenden Grün-Impulses ebenfalls ein Kopieren von Farbwerten vorgenommen wird. Über diesen Nulldurchgang des Steuersignals c hinweg, der zwischen den beiden Farbimpulsen auftritt, wird jedoch kein Kopieren vorgenommen. Damit ist sichergestellt, daß Farbwerte des Rot-Impulses nicht mit solchen des Grün-Impulses bzw. umgekehrt vermischt werden. Gleichwohl wird eine vorteilhafte Versteilerung der Farbimpulse gemäß Kurvenverlauf d erzielt.

Der in der Fig. 1 dem Rot-Impuls nachfolgende Grün-Impuls wird in entsprechender Weise verarbeitet, wobei hier jedoch zuerst eine negative und darauffolgend eine positive Flanke auftritt.

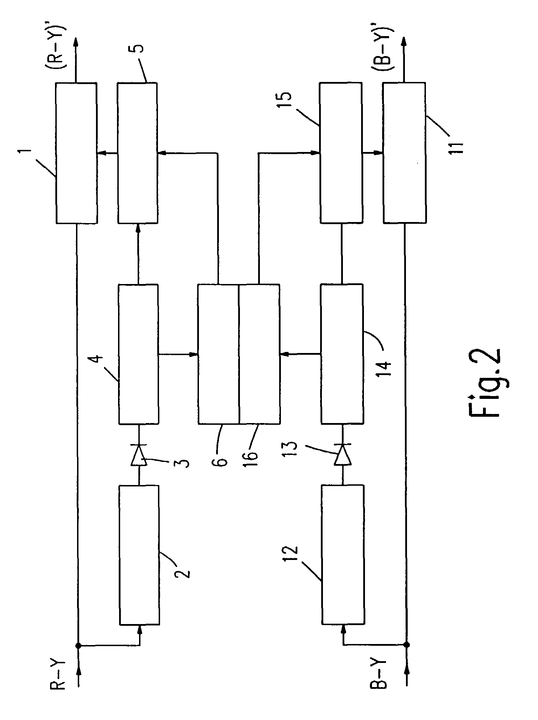

In Fig. 2 der Zeichnung ist ein Blockschaltbild einer erfindungsgemäßen Anordnung dargestellt, mittels welcher eine Versteilerung der Kanten eines Farbsignals vorgenommen werden kann.

In dem Beispiel gemäß Fig. 2 wird davon ausgegangen, daß das Farbsignal in Form zweier Farbdifferenzsignale R-Y und B-Y vorliegt.

Das Farbdifferenzsignal R-Y wird einer Kopierschaltung 1 und einem ersten Differenzierer 2 zugeführt. Dem Differenzierer 2 ist ein Gleichrichter 3 nachgeschaltet, dessen Ausgangssignal einem zweiten Differenzierer 4 zugeführt wird. Der zweite Differenzierer 4 erzeugt das oben beschriebene Steuersignal, welches einer Kopierbegrenzungsschaltung 5 und einer Steuerschaltung 6 zugeführt wird. Die Kopierbegrenzungsschaltung 5 ihrerseits steuert die Kopierschaltung 1, welche ausgangsseitig das versteilerte Farbdifferenzsignal (R-Y)' liefert. Die Schaltungselemente 1 bis 6 sind ausschließlich für das Farbdifferenzsignal R-Y vorgesehen.

Das Farbdifferenzsignal B-Y wird in entsprechender Weise einer Kopierschaltung 11 und einem ersten Differenzierer 12 zugeführt, dessen Ausgangssignal nach Gleichrichtung mittels eines Gleichrichters 13 auf eine zweite Differenzierschaltung 14 geführt wird, welche das Steuersignal einerseits an eine Kopierbegrenzungsschaltung 15 und außerdem an eine Steuerschaltung 16 liefert.

Mittels der Kopierschaltungen 1 und 11 wird getrennt in den beiden Farbdifferenzsignalen ein Kopieren von Farbwerten von Farbbildpunkten in der oben beschriebenen Weise vorgenommen, wie er beispielhaft in Fig. 1 dargestellt ist.

Die Steuerung dieses Kopiervorgangs wird mittels der Steuerschaltungen 6 und 16 vorgenommen, wobei eine getrennte Steuerung für die beiden Farbdifferenzsignale R-Y und B-Y vorgenommen wird, so daß deren Impulse getrennt verarbeitet und versteilert werden.

Die Steuerschaltungen 6 und 16 verarbeiten das Steuersignal der beiden zweiten Differenzierer 4 und 14 in der oben beschriebenen Weise und steuern die Kopierbegrenzungsschaltungen 5 bzw. 15 so, daß über Nullpunkte oder Bereich um Nullpunkte des Steuersignals hinweg keine Kopiervorgänge stattfinden. In den übrigen Bereichen werden bei entsprechenden Werten des Steuersignals Kopiervorgänge mittels der Kopierschaltungen 1 bzw. 11 vorgenommen.

Damit kann gemäß dieser relativ einfachen Anordnung ein nebenwirkungsfreies Kopieren entsprechend den Kurvenverläufen gemäß Fig. 1 vorgenommen werden.

## Patentansprüche

1. Verfahren zur Versteilerung der Kanten eines Farbsignals, wobei ein Steuersignal generiert wird, welches durch Differentiation, Gleichrichtung und durch nachfolgende Differentiation der gleichgerichteten ersten Differentiation gewonnen wird und zeitlich dem Farbsignal zugeordnet ist, wobei in Abhängigkeit des Steuersignals ein Kopieren von Farbwerten von Referenzbildpunkten des Farbsignals auf Flankenbildpunkte des Farbsignals in der Weise vorgenommen wird, daß bei positivem Steuersignal ein Kopieren der Farbwerte von vor den Flankenbildpunkten angeordneten Referenzbildpunkten und bei negativem Steuersignal von hinter dem Flankenbildpunkten angeordneten Referenzbildpunkten auf die Flankenbildpunkte erfolgt,
dadurch gekennzeichnet,
daß ein Kopieren eines Farbwertes eines Referenzbildpunktes auf einen Flankenbildpunkt nur dann erfolgt, wenn die Werte des Steuersignals in dem zugeordneten Bereich zwischen dem Referenzbildpunkt und dem Flankenbildpunkt keinen Nulldurchgang aufweisen.

2. Verfahren nach Anspruch 2, dadurch gekennzeichnet, daß in einem vorgegebbaren Bereich um eine Nullstelle der Werte Steuersignals herum kein Kopiervorgang der Farbwerte der Bildpunkte im zugeordneten Bereich des Farbsignals erfolgt.

3. Verfahren nach Anspruch 1 oder 2, dadurch gekennzeichnet, daß das Farbsignal in Form zweier Farbdifferenzsignale vorliegt und daß die Farbdifferenzsignale getrennt verarbeitet werden.

4. Anordnung zur Durchführung des Verfahrens nach einem der Ansprüche 1 bis 3, dadurch gekennzeichnet, daß das Farbsignal einem ersten Differenzierer (2;12) und einer Kopierschaltung (1;11) zugeführt wird, daß das Ausgangssignal des ersten Differenzierers (2;12) einem Gleichrichter (3;13) zugeführt wird, dessen Ausgangssignal einem zweiten Differenzierer (4;14) zugeführt wird, der das Steuersignal generiert, und daß eine Steuerschaltung (6) vorgesehen ist, welche in Abhängigkeit des Steuersignals dieses mittels einer Kopierbegrenzungsschaltung (5;15) so verändert, daß ein Kopieren von Farbdaten zwischen Bildpunkten des Farbsignals mittels der Kopierschaltung (1;11) ausschließlich in solchen Bereichen des Farbsignals stattfindet, in denen die Werte des zugeordneten Steuersignals keinen Nulldurchgang aufweisen.

5. Anordnung nach den Ansprüchen 4 und 3, dadurch gekennzeichnet, daß jedem der Farbdifferenzsignale jeweils ein erster Differenzierer, ein Gleichrichter und ein zweiter Differenzierer zugeordnet sind.

6. Anordnung nach Anspruch 4, dadurch gekennzeichnet, daü das Farbsignal in Form zweier Farbdifferenzsignale vorliegt, daß jedem Farbsignal jeweils ein erster Differenzierer zugeordnet ist und daß die Ausgangssignale der beiden ersten Differenzierer einem Gleichrichter zugeführt werden, dem ein zweiter Differenzierer nachgeschaltet ist.

7. Farbsignal, dessen Flanken mittels des Verfahrens nach einem der Ansprüche 1 bis 3 versteilert sind.

8. Bildwiedergabegerät mit einer Anordnung gemäß einem der Ansprüche 4 bis 6.
